# EUROPÄISCHE PATENTSCHRIFT

(11) **EP 1 764 276 B1**
(45) Veröffentlichungstag und Bekanntmachung des Hinweises auf die Patenterteilung: **19.11.2008**
(21) Anmeldenummer: 06018509.7
(22) Anmeldetag: 05.09.2006
(51) Int. Cl.: B60T 13/26, B60T 17/18

(54) **Druckluftbremsanlage für ein Kraftfahrzeug**
Vehicle air braking system
Système de freinage pneumatique pour véhicule automobile

(30) Priorität: 08.09.2005 DE 102005042673
(43) Veröffentlichungstag der Anmeldung: 21.03.2007
(73) Patentinhaber: MAN Nutzfahrzeuge Aktiengesellschaft, 80976 München (DE)
(72) Erfinder: Kirchmeier, Klaus, 85737 Ismaning (DE); Hofstetter, Thomas, 84048 Mainburg (DE)

(56) Entgegenhaltungen:
- EP-A2- 0 738 640
- DE-A1- 4 003 122
- DE-C1- 19 504 393

## Beschreibung

### Technisches Gebiet:

Die Erfindung betrifft eine Druckluftbremsanlage für ein Kraftfahrzeug, insbesondere Nutzfahrzeug, mit wenigstens einer Luftverdichtereinheit, durch die gegenüber Umgebungsluft zumindest teilweise verdichtete Luft erzeugbar und in wenigstens einen ersten sowie einen zweiten Bremskreis förderbar ist. Hierbei ist an wenigstens einer Fahrzeugachse zumindest ein Bremselement vorgesehen, das über den ersten Bremskreis mit verdichteter Luft versorgbar ist, während der zweite Bremskreis ein Anschlusselement aufweist, an das eine Bremsleitung eines Anhängers und/oder Aufliegers zur Versorgung einer Anhängerbremsanlage mit verdichteter Luft ankoppelbar ist.

### Stand der Technik:

Dokument DE 195 04 393 C1 offenbart eine Druckluftbremsanlage eines Nutzfahrzeugs gemäß Oberbegriff des Anspruchs 1.

Insbesondere schwere Kraftfahrzeuge wie Lastkraftwagen und Omnibusse über 7,5 t Gesamtgewicht lassen sich mit einer hydraulischen Bremsanlage nicht mehr verkehrssicher abbremsen. Dazu sind die abzubremsenden Massen zu groß. In Nutzfahrzeugen wird daher zur Erzeugung der erforderlichen Spannkräfte an den Radbremsen Druckluft als Fremdenergie verwendet. In diesem Zusammenhang besteht die Möglichkeit, Druckluft-Bremsanlagen ein- oder zweikreisig aufzubauen. Die derzeit in Europa für Nutzfahrzeuge und deren Anhänger verbindlich vorgeschriebene so genannte EG-Bremsanlage nach EU-Richtlinie 71/320/EWG ist eine zweikreisige Zweileitungs-Druckluft-Bremsanlage mit Anhängerbremsanschluss. Durch die Zuordnung der Radbremsen eines Fahrzeuges auf zwei getrennte Bremskreise wird gewährleistet, dass bei Ausfall des Hauptbremskreises das Fahrzeug noch über den Nebenbremskreis abgebremst werden kann. Die mindestens zwei Räder des Nebenbremskreises dürfen dabei nicht auf einer Fahrzeugseite liegen.

Zwischen dem Motorwagen und dem Anhänger bzw. Auflieger sind bei der vorgenannten Druckluft-Bremsanlage zwei Leitungen vorgesehen. Über die eine Leitung, die Vorratsleitung, wird ständig Druckluft zum Anhänger befördert, während die zweite Leitung speziell zum Steuern des Abbremsvorganges dient. Insgesamt besteht die EG-Bremsanlage aus vier voneinander unabhängigen Kreisen, die durch das Vierkreisschutzventil abgesichert sind. Die Druckluftkreise 1 und 2 versorgen die Vorder- und Hinterachsbremse des Motorwagens, der Kreis 3 versorgt die Feststell-Bremsanlage sowie die Anhängerbremse und der Kreis 4 versorgt die Nebenverbraucher mit Druckluft.

In diesem Zusammenhang ist aus der DE 195 14603 A1 eine Druckluft-Bremsanlage für ein Nutzfahrzeug bekannt, die einen Vorderachsbremskreis und einen Hinterachsbremskreis und diesen je einzeln zugeordnete Druckluftbehälter aufweist. Die Bremsanlage verfügt über eine Bremsventilanordnung mit den Bremskreisen je einzeln zuordneten Druckausgängen, wobei der zur Aktivierung der einen Vorderradbremse vorgesehene pneumatische Zylinder direkt an den Vorderachsdruckausgang der Bremsventilanordnung angeschlossen ist, während der für die andere Vorderradbremse vorgesehene pneumatische Zylinder an diesen Druckausgang über ein elektrische ansteuerbare Umschaltmagnetventilanordnung angeschlossen ist.
Die Umschalt-Magnetventilanordnung wird im Falle eines Lecks im Vorderachsbremskreis aus einer den intakten Zustand der Bremsanlage zugeordneten Grundstellung in eine einem Notbremsbetrieb zugeordnete Funktionsstellung überführt. Diese Umschaltung erfolgt, sobald ein elektrischer Überwachungssensor ein entsprechendes Leck detektiert. Hierbei wird im Notbetrieb der über die Magnetventilanordnung gegen Vorderachs- Druckausgang der Bremsventilanordnung abgesperrte Radbremszylinder aus einem weiteren Druckluftbehälter des Fahrzeugs mit einem Druck beaufschlagt. Damit wird im Notbremsbetrieb der eine Bremszylinder des Vorderachsbremskreises mit dem vom Druckluftbehälter des Vorderachsbremskreises abgeleiteten, am Vorderachsdruckausgang der Bremsventilanordnung bereitgestellten Druck versorgt, während der andere Bremszylinder des VorderachsBremskreises an den dem Hinterachsbremskreis zugeordneten Druckausgang der Bremsventilanordnung angeschlossen ist. Je nach dem, an welcher Fahrzeugseite der VorderachsBremskreis schadhaft ist, erfolgt die Notbremsung unter Ausnutzung des im Druckluftbehälter des Vorderachsbremskreises verbliebenen Druckvorrates oder unter Nutzung des im Druckluftbehälters des Hinterachsbremskreises vorhandenen Druckluftvorrats.

Weiterhin ist aus der DE 40 03 122 A1 eine Vorrichtung zur Sicherung der Seitenweisen Druckgleichheit bei elektronisch geregelten Druckluftbremsanlagen von Fahrzeugen bekannt. Bei einer sowohl mit einer elektrischen Bremssteuerung als auch mit einer Steuerelektronik für ABS und ASR ausgestatteten Bremsanlage eines Fahrzeugs ist es im normalen Betriebsbremsfall, also bei ruhender Steuerelektronik, erforderlich, dass die bei derartigen Anlagen an Vorderachse und Hinterachse je zwei Seiten eingesetzten E/P-Umsetzer bzw. -Wandler druckgleich arbeiten, um ungleichen Bremsverschleiß und damit erhöhte Kosten zu vermeiden. Zur Erzielung einer derartig abgesicherten Seitenweisen Druckgleichheit bei elektronisch geregelten Druckluftbremsanlagen sind die E/P- Umsetzter der beiden Seiten jeweils von Vorderachse und Hinterachse über je ein Ventil miteinander verbunden. Auf diese Weise werden im normalen Betriebsbremsfall in den Vorsteuerräumen der Umsetzer immer gleiche Druckbedingungen eingestellt. Bei Überlagerung durch die Steuerelektronik der Bremsanlage werden die Ventile mittels elektrischer Beeinflussung in gesperrte Lage gebracht, in welcher die pneumatische Verbindung zwischen E/P-Umsetzern gesperrt ist und die individuelle Regelung pro Seite einer Achse bzw. mehrerer Achsen einsetzt.

Die vorbeschriebenen technischen Lösungen stellen somit Sicherheitseinrichtungen dar, durch die gewährleistet werden soll, dass an den Radbremszylindern auch bei ungleicher Lastverteilung, unterschiedlichen Fahrbedingungen oder sogar bei Auftreten eines Lecks in der Druckluftversorgungsanlage gleiche und vor allem die für ein sicheres Abbremsen des Kraftfahrzeugs erforderlichen Bremskräfte wirken. Ein weiteres Problem beim Betrieb einer Druckluftbremsanlage in Kraftfahrzeugen kann allerdings auftreten, sobald ein Motorwagen, insbesondere eine Sattelzugmaschine, ohne Anhänger betrieben wird und es hierbei zum Ausfall eines Bremskreises, vornehmlich des Vorderachsbremskreises, kommt. Bei Ausfall des Vorderachsbremskreises kann die Druckluftbremsanlage bspw. einer Sattelzugmaschine mit sehr leichter Hinterachse unter Umständen die für eine Abbremsung des Fahrzeugs erforderliche Bremskraft nicht bereitstellen. Dies trifft sowohl auf die Betriebsbremse als auch auf die Federspeicherbremse zu.

Ausgehend von dem bekannten Stand der Technik sowie dem zuvor geschilderten Problem besteht die Aufgabe der Erfindung darin, eine Druckluftbremsanlage anzugeben, die einen sicheren Betrieb eines ohne Anhänger betriebenen Motorwagens, insbesondere einer Sattelzugmaschine, auch bei Ausfall eines Bremskreises gewährleistet. Hierbei ist insbesondere darauf zu achten, dass auch bei Ausfall eines Bremskreises an wenigstens einer Achse die für die Abbremsung des Solofahrzeugs erforderliche Bremskraft bzw. die zur Erzeugung dieser Bremskraft benötigte Druckluftmenge bereitgestellt wird.

Die Lösung der vorgenannten Aufgabe wird mit einer Druckluftbremsanlage gemäß Patentanspruch 1 gelöst. Vorteilhafte Ausführungsformen sind Gegenstand der Unteransprüche und werden in der nachfolgenden Beschreibung unter Bezugnahme auf die Figuren näher erläutert. Ein Verfahren zur Versorgung einer Druckluftbremsanlage eines Nutzfahrzeugs, mit dem ebenfalls die zuvor genannte Aufgabe lösbar ist, wird im Anspruch 7 angegeben.

Die Erfindung betrifft eine Druckluftbremsanlage für ein Kraftfahrzeug, insbesondere für ein Nutzfahrzeug, mit wenigstens einer Luftverdichtereinheit, durch die gegenüber Umgebungsluft zumindest teilweise verdichtete Luft erzeugbar und in wenigstens einen ersten sowie einen zweiten Bremskreis förderbar ist, wobei an wenigstens einer Fahrzeugachse zumindest ein Bremselement vorgesehen ist, das über den ersten Bremskreis mit verdichteter Luft versorgbar ist und wobei der zweite Bremskreis ein Anschlusselement aufweist, an das eine Bremsleitung eines Anhängers und/oder Aufliegers zur Versorgung einer Anhängerbremsanlage mit verdichteter Luft ankoppelbar ist. Erfindungsgemäß ist eine derartige Druckluftbremsanlage derart weitergebildet worden, dass eine Redundanzleitung vorgesehen ist, die mit dem Anschlusselement und/oder mit einer Zuführleitung, über die das Anschlusselement mit verdichteter Luft versorgbar ist, verbunden ist und über die das zumindest eine Bremselement wenigstens zeitweise mit verdichteter Luft versorgbar ist.

Mit der erfindungsgemäß ausgeführten Druckluftbremsanlage wird somit eine Druckluft-Bevorratungsredundanz an einer Achse eines Kraftfahrzeugs geschaffen. Vorzugsweise ist über die Redundanzleitung der Bremskreis einer Vorderachse mit Druckluft versorgbar.

In einer besonderen Ausführungsform handelt es sich bei der Druckluftbremsanlage um die Bremsanlage einer Sattelzugmaschine, wobei über den ersten Bremskreis an einer Vorderachse angeordnete Bremselemente und über den zweiten Bremskreis ein Anschlusselement, an das eine Bremsleitung eines Aufliegers ankoppelbar ist, mit verdichteter Luft versorgbar ist. Eine spezielle Weiterbildung einer Druckluftbremsanlage für eine Sattelzugmaschine sieht in diesem Zusammenhang vor, dass zumindest eine Bremsleitung, vorzugsweise die Steuerleitung, einer ohne Auflieger betriebenen Sattelzugmaschine an einen an der Zugmaschine vorgesehenen Druckluftleitungsanschluss angeschlossen wird, um auf diese Weise die Redundanzleitung mit der erforderlichen Druckluft zu versorgen. Hierbei eignet es sich besonders den bislang an einer Sattelzugmaschine vorgesehenen Blindanschluss, der lediglich der Befestigung der Bremsanschlüsse während einer Solofahrt einer Sattelzugmaschine dient, als Anschlusskupplungselement auszuführen, an den die entsprechende Bremsleitung luftdicht anschließbar und so die Redundanzleitung mit der erforderlichen Druckluft versorgbar ist.

Eine weitere vorteilhafte Gestaltung der erfindungsgemäßen Druckluftbremsanlage sieht einen Sensor vor, mit dem die Anwesenheit eines Anhängers und/oder Aufliegers detektiert wird. Mit einem entsprechenden Sensor ist es möglich festzustellen, ob ein Anhänger angekuppelt und insbesondere, ob eine Bremsleitung des Anhängers an das Anschlusselement am Motorwagen angeschlossen ist, so dass die Anhängerbremsanlage mit Druckluft versorgt wird. Wird mit Hilfe des vorbeschriebenen Sensors detektiert, dass kein Anhänger bzw. Auflieger an den Motorwagen angekuppelt ist, ist das Anschlusselement oder eine Versorgungsleitung, die das Anschlusselement mit zumindest teilweise verdichteter Luft versorgt, frei für eine redundante Versorgung wenigstens eines Bremselements an einer Achse. Besonders bietet sich in diesem Fall die redundante Versorgung der an der Vorderachse vorgesehenen Bremselemente mit verdichteter Luft über die Redundanzleitung an.

Vorzugsweise handelt es sich bei dem Anschlusselement des Motorwagens um den Zweileitungs- Bremsanschluss, wobei die Redundanzleitung vorteilhafterweise an den Anschluss für die Steuerleitung der Anhängerbremsanlage angeschlossen wird. Hierbei versteht es sich von selbst, dass die Redundanzleitung nicht an das Kupplungselement des Bremsanschlusses angeschlossen wird, sondern eine luftdichte Verbindung in einem Bereich hergestellt wird, in dem die Zuführung verdichteter Luft zum Kupplungselement des Motorwagen-Bremsanschlusses erfolgt.

Kommt es bei einem Fahrzeug, an das kein Anhänger bzw. Auflieger angekuppelt ist und das über die erfindungsgemäße Druckluftbremsanlage verfügt, zu einem Ausfall einer Druckluftversorgung in einem ersten Bremskreis, so werden die üblicherweise von diesem Bremskreis mit Druckluft versorgten Bremselemente über die Redundanzleitung mit Druckluft versorgt. In diesem Fall strömt zumindest teilweise verdichtete Luft aus einem zweiten Bremskreis, in den das Anschlusselement mit dem Kupplungskopf für die Bremsschläuche eines Anhängers integriert ist, über die Redundanzleitung zumindest in die Teilbereiche des ersten Bremskreises, an die Bremselemente angeschlossen sind. Auf diese Weise wird auch bei Ausfall eines Bremskreises sichergestellt, dass die in diesem Bremskreis angeordneten Bremselemente eine für den jeweiligen Bremsvorgang ausreichende Menge verdichteter Luft erhalten.

In diesem Zusammenhang sieht eine ganz spezielle Ausführungsform vor, dass zwischen dem Anschlusselement und dem ersten Bremskreis zumindest ein Zweiwegeventil angeordnet ist. Dieses Zweiwegeventil wird vorzugsweise in Abhängigkeit eines Signals gesteuert, das mittels des Sensors zur Detektion der Anhängeranwesenheit generiert wird. Sobald der Sensor detektiert, dass keine Anhängerbremsleitung an den Kupplungskopf des Anschlusselements angeschlossen ist, wird das Zweiwegeventil in einen Bereitschaftszustand versetzt. Kommt es während das Zweiwegeventil in den Bereitschaftszustand versetzt ist zu einem Druckabfall im ersten Bremskreis, wird das Zweiwegeventil derart geschaltet, dass über die Redundanzleitung verdichtete Luft aus dem das Anschlusselement versorgenden Bremskreis in den ersten Bremskreis zur Versorgung der dort vorgesehenen Bremselemente geleitet wird. Vorzugsweise werden auch in diesem Fall die an der Vorderachse eines zumindest zeitweise ohne Anhänger oder Auflieger betriebenen Solofahrzeugs vorgesehenen Bremselemente über die Redundanzleitung mit verdichteter Luft versorgt.

Neben der vorbeschriebenen Druckluftbremsanlage betrifft die Erfindung ebenfalls ein Verfahren zur Versorgung einer Druckluftbremsanlage eines Nutzfahrzeugs mit zumindest teilweise gegenüber Umgebungsluft verdichteter Luft. Bei dem erfindungsgemäßen Verfahren wird die zumindest teilweise verdichtete Luft in einen ersten und einen zweiten Bremskreis gefördert, wobei über den ersten Bremskreis zumindest ein an einer Vorderachse des Nutzfahrzeugs angeordnetes Bremselement und über den zweiten Bremskreis ein Anschlusselement des Nutzfahrzeugs, an das wenigstens ein Bremskreis eines Anhängers und/oder Aufliegers anschließbar ist, mit verdichteter Luft versorgt wird. Das erfindungsgemäße Verfahren zeichnet sich dadurch aus, dass überwacht wird, ob an das Anschlusselement ein Bremskreis des Anhängers und/oder Aufliegers angeschlossen ist und das sobald festgestellt wird, dass kein Bremskreis des Anhängers und/oder Aufliegers angeschlossen ist, ein Ventil derart in einen Bereitschaftszustand versetzt wird, dass im Bedarfsfall zumindest teilweise verdichtete Luft vom zweiten in den ersten Bremskreis geleitet wird geschaltet wird. Um einen Bedarfsfall handelt es sich hierbei insbesondere, wenn bei dem Nutzfahrzeug ein Druckabfall in einem Bremskreis, etwa dem Vorderachsbremskreis, eintritt.

Mit dem vorbeschriebenen Verfahren wird sichergestellt, dass ein Motorwagen, insbesondere eine Sattelzugmaschine, der ohne Anhänger bzw. Auflieger betrieben wird, zuverlässig abbremsbar ist. Dies ist vor allem darauf zurückzuführen, dass mit dem erfindungsgemäßen Verfahren in jedem Fall auch eine Achse, die üblicherweise aus einem Vorratsbehälter mit Druckluft versorgt wird und an der diese übliche Luftversorgung defekt ist, mit Druckluft, die ansonsten für den Anhänger bereitgestellt wird, versorgt wird.

Im Folgenden wird die Erfindung ohne Beschränkung des allgemeinen Erfindungsgedankens anhand eines Ausführungsbeispiels unter Bezugnahme auf die Figuren näher erläutert. Es zeigen:
- Fig. 1:: Schematische Darstellung einer Zwei-Leitungs-Bremsanlage bei einem Motorwagen ohne Anhänger;
- Fig. 2:: Redundante Druckluftversorgung einer Vorderachse mit einem Zweiwegeventil;
- Fig. 3:: Redundante Druckluftversorgung einer Vorderachse mit zwei Zweiwegeventilen;
- Fig. 4: Schematische Darstellung einer Zwei-Leitungs-Bremsanlage, bei der die Redundanzleitung über einen Bremsschlauch einer Sattelzugmaschine mit Druckluft versorgt wird.

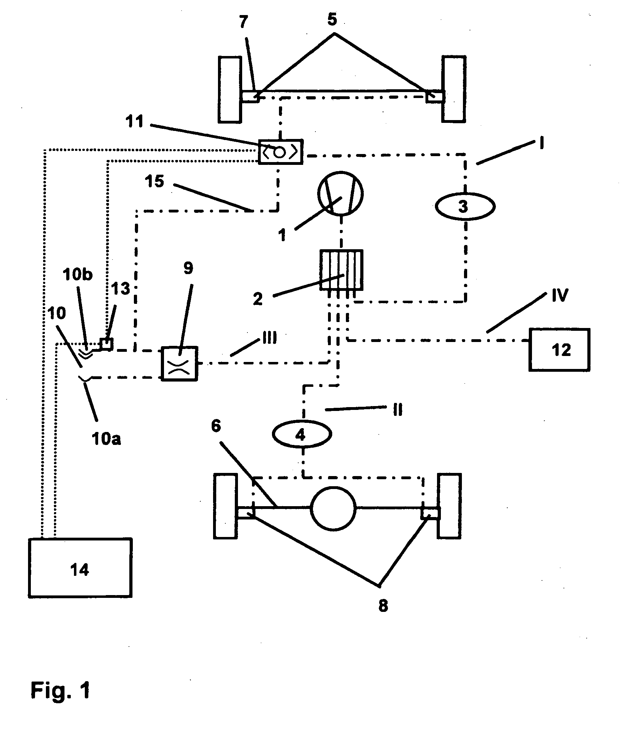

Die Figur 1 zeigt schematisch den Aufbau einer Zwei-Leitungs-Bremsanlage eines Nutzfahrzeugs, wobei aus Gründen der Übersichtlichkeit lediglich die für die Erfindung wesentlichen Bauteile dargestellt sind. Dies geschieht auch vor dem Hintergrund, dass die erfindungsgemäße, redundante Luftversorgung eines Bremskreises aus dem Bremskreis der für die Luftversorgung der Anhängerbremsanlage vorgesehen ist, bei den verschiedensten Druckluftbremsanlagen anwendbar ist. So ist es bspw. unerheblich, ob das Fahrzeug mit einem ABS-System ausgerüstet ist, bzw. ob die Luftversorgung Achsen- oder Radweise erfolgt.

Die vom Verdichter 1 geförderte Druckluft gelangt über einen Druckregler, der den Druck in der Anlage automatisch in einem engen Bereich regelt, zum Lufttrockner. Im Lufttrockner wird die in der Druckluft enthaltene Feuchtigkeit entzogen und über eine Entlüftung ins Freie geleitet. Das nachfolgende Vierkreisschutzventil 2 sichert bei Defekten eines oder mehrerer Kreise die intakten Kreise gegen Druckabfall ab. Innerhalb der Betriebsbremskreise I und II strömt die Luft über Luftvorratsbehälter 3, 4 zu den Motorwagen-Bremsventilen 5, 6 an der Vorderachse 7 bzw. an der Hinterachse 8. Im Bremskreis III gelangt die verdichtete Luft einerseits vom Vierkreisschutzventil 2 über das im Anhängersteuerventil 9 integrierte 2/2-Wegeventil zum Anschlusselement 10, das automatische Kupplungsköpfe 10a, 10b zum Anschluss des Vorratskreises sowie des Bremssteuerkreises 10b der Anhängerbremsanlage aufweist. Die hinter dem Anhängersteuerventil angeordneten Kupplungsköpfe 10a, 10b verfügen jeweils über ein automatisches Absperrventil, so dass keine Luft aus den Kupplungsköpfen 10a, 10b austreten kann, sobald keine Anhängerbremsschläuche angeschlossen sind. Andererseits gelangt die verdichtete Luft im Bremskreis III über ein Rückschlagventil, ein Handbremsventil und ein Relaisventil in den Federspeicherteil der so genannten Tristop-Zylinder, die die eingebaute Druckfeder auf Spannung halten, sobald sie voll belüftet sind. Über den Druckluftbremskreis IV werden eventuelle Nebenverbraucher 12, wie z. B. die Motorstaudruckbremsanlage, mit Druckluft versorgt.

An der Versorgungsleitung für den Kupplungskopf 10b, an den der Bremsschlauch für die Bremssteuerkreis des Anhängers anschließbar ist, ist ein Sensor 13 vorgesehen, der detektiert, ob eine Bremsleitung des Anhängers an den Kupplungskopf 10b angeschlossen ist. Sobald keine Anhängerbremsleitung an den Kupplungskopf 10b angeschlossen ist generiert der Sensor 13 ein entsprechendes Signal, das an eine Steuereinheit 14, die in einen Fahrzeugführungsrechner integriert sein kann, weitergeleitet wird. Die Steuereinheit sendet ein Signal an das Zweiwegeventil 11, das in der Steuerleitung des Zweileitungs-Bremsanschlusses vorgesehen ist und über das nunmehr eine redundante Versorgung der an der Vorderachse 7 vorgesehenen Bremselemente 5 mit Druckluft möglich ist. Sobald es zu einem Ausfall des Bremskreises I an der Vorderachse 7 kommt, dichtet das Vierkreisschutzventil 2 den Bremskreis I ab und es kommt zu einem einseitigen Druckabfall an dem Zweiwegeventil 11. In diesem Fall wird das Zweiwegeventil 11 derart geschaltet, dass die an der Vorderachse 7 vorgesehenen Bremselemente nicht mehr aus dem Bremskreis I, sondern über das Zweiwegeventil aus dem Bremskreis III mit verdichteter Luft versorgt werden. Gleichzeitig erhält der Fahrer automatisch ein visuell und/oder akustisch wahrnehmbares Signal, dass ihn über den Schaden in der Druckluftversorgungsanlage informiert.

Mit der vorbeschriebenen technischen Lösung wird sichergestellt, dass die an der Vorderachse 7 vorgesehenen Bremselemente 5 in jedem Fall mit einer ausreichenden Menge Druckluft versorgt werden. Selbst bei Ausfall des Vorderachsbremskreises I kann der Motorwagen, an dem kein Anhänger angekuppelt ist, abgebremst werden, indem die Bremselemente 5 an der Vorderachse 7 über die Redundanzleitung 15 mit verdichteter Luft versorgt werden. Auch eine Sattelzugmaschine mit leichter Hinterachse, die ansonsten die erforderliche Bremskraft möglicherweise nicht auf die Straße bringen könnte, kann mit einer wie in der Figur 1 ausgeführten Druckluftbremsanlage sicher zum Stehen gebracht werden.

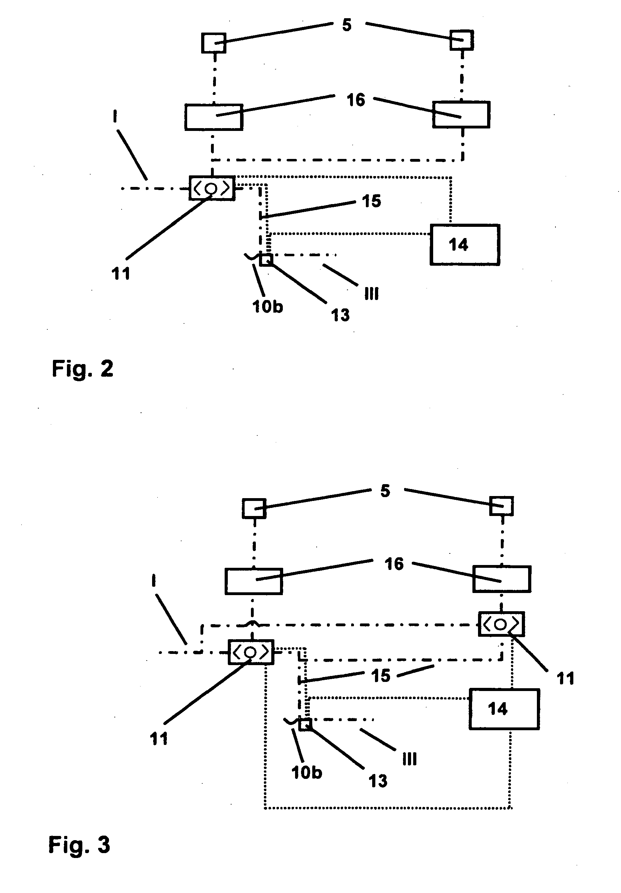

In Figur 2 ist die redundante Versorgung einer Vorderachse mit verdichteter Luft unter Einsatz eines Zweiwegeventils 11 dargestellt. Üblicherweise werden die an der Vorderachse vorgesehenen Bremszylinder 5 aus dem Bremskreis I jeweils über EBS-Druckmodule 16 mit verdichteter Luft versorgt. Kommt es bei einem Nutzfahrzeug, das ohne Anhänger bzw. Auflieger betrieben wird, zu einem Ausfall des Bremskreises I, bspw. aufgrund eines Lecks, so kann das Fahrzeug ausschließlich mittels der an der Hinterachse vorgesehenen Bremselemente abgebremst werden. Verfügt das Fahrzeug, etwa eine Sattelzugmaschine, lediglich über eine leichte Hinterachse, reichen die über die an der Hinterachse vorgesehenen Bremselemente realisierbaren Bremskräfte oftmals nicht aus, um das Fahrzeug sicher zum Stehen zu bringen.

Bei der in Figur 2 dargestellten Lösung wird mittels eines Sensors 13 detektiert, ob die Bremssteuerleitung eines Anhängers an den Kupplungskopf 10b des Anschlusselements 10 angeschlossen ist. Das vom Sensor generierte Signal wird an eine Steuereinheit 14, die in einen Fahrzeugführungsrechner integriert sein kann, übermittelt, dort verarbeitet und unter Zugrundelegung des verarbeiteten Signals das Zweiwegeventil 11 bzw. bei der in Figur 3 dargestellten Lösung die Zweiwegeventile 11 angesteuert.

Sobald kein Anhänger angekuppelt und somit auch kein Bremsschlauch angeschlossen ist, wird eine Schaltung des Zweiwegeventils 11 im Bedarfsfall freigegeben. Kommt es zum Ausfall des Bremskreises I, so dass die Bremszylinder 5 aus diesem Bremskreis nicht oder nicht ausreichend mit verdichteter Luft versorgt werden, so wird das Zweiwegeventil 11 derart geschaltet, dass die Bremselemente 5 an der Vorderachse 7 nun aus dem Bremskreis III mit verdichteter Luft versorgt werden.

Figur 3 zeigt eine Ausführungsform, bei der die redundante Luftversorgung des Bremskreises I mit Hilfe von zwei Zweiwegeventilen realisiert wird. In diesem Fall ist jedem Bremszylinder 5 an der Vorderachse ein Zweiwegeventil 11 zugeordnet. Sollte es während der Sensor 13 die Abwesenheit eines Anhängers und damit der entsprechenden Anhängerbremssteuerleitung detektiert hat zu einem Ausfall des Bremskreises I kommen, kommt es an den Zweiwegeventilen 11 einseitig zu einem Druckabfall und die Zweiwegeventile 11 werden derart geschaltet, dass die Bremszylinder 5 an der Vorderachse aus dem Bremskreis III mit verdichteter Luft versorgt werden.

Die vorgeschlagene technische Lösung ermöglicht somit den sicheren Betrieb eines Nutzfahrzeugs mit einer vergleichsweise leichten Achse auch für den Fall, dass es gerade an der anderen Achse zu einem Druckabfall in der Druckluftversorgung der Bremsanlage kommt.

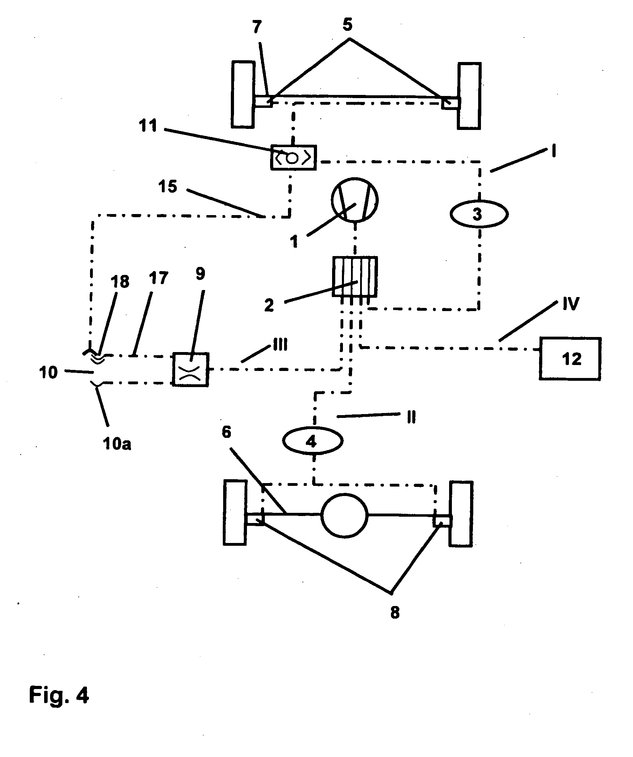

In Figur 4 ist schematisch eine Zwei-Leitungs-Bremsanlage einer Sattelzugmaschine dargestellt, bei der die Redundanzleitung 15 über einen Bremsschlauch 17 der Sattelzugmaschine mit Druckluft versorgt wird. Wird die Sattelzugmaschine mit einem angekuppelten bzw. aufgesattelten Auflieger betrieben, so wird über den Bremsschlauch 17 die Anhänger-Steuerleitung mit Druckluft versorgt. In dem dargestellten Fall wird die Sattelzugmaschine jedoch als Solofahrzeug, also ohne Auflieger betrieben und der Bremsschlauch 17 dient der Versorgung der Redundanzleitung 15 bzw. im Bedarfsfall des ersten Bremskreises (I), insbesondere also des Vorderachsbremskreises, mit der benötigten Druckluft, um so auch bei Ausfall des ersten Bremskreises (I) während einer Solofahrt eine ausreichende Bremskraft bereitzustellen.

Üblicherweise werden bei Betrieb der Sattelzugmaschine als Solofahrzeug die am Fahrzeug befestigten Bremsleitungen an Blindanschlüssen befestigt, so dass die Leitungen während der Fahrt nicht lose auf dem Fahrzeug liegen oder sogar beschädigt werden. Bei dem in Figur 4 dargestellten Ausführungsbeispiel der Erfindung wird der zum Anschluss an die Anhänger-Steuerleitung vorgesehene Bremsschlauch 17 nicht an einen Blindanschluss angeschlossen, sondern der Kupplungskopf 18 des Bremsschlauches 17 wird über ein entsprechendes Verbindungselement 19 luftdicht mit der Redundanzleitung 15 verbunden. Das hierbei üblicherweise hinter dem Fahrerhaus der Sattelzugmaschine vorgesehene Verbindungselement 19 ersetzt in diesem Fall den Blindanschluss. Die zumindest annähernd luftdichte Verbindung zwischen dem Kupplungskopf 18 des Bremsschlauches 17 und dem an der Sattelzugmaschine befestigten Verbindungselement 19 erfolgt genauso wie bei einem Anschluss des Kupplungskopfes 18 an die Anhänger-Steuerleitung eines Aufliegers. Der große Vorteil dieser technischen Lösung besteht vor allem darin, dass der Fahrer vor einer geplanten Solofahrt den Bremsschlauch 17 mit dem Kupplungskopf 18 nach wie vor an der gewohnten Stelle des Fahrzeugs und mit den ihm bekannten Handgriffen befestigt. Somit wird zum einen mit hoher Wahrscheinlichkeit sicher gestellt, dass die Verbindung zwischen dem Kupplungskopf 18 und dem Verbindungselement 19 vor Beginn einer Solofahrt hergestellt wird und zum anderen, dass die Sicherheit bei einer Solofahrt mit einer Sattelzugmaschine erhöht, ohne dass hierfür größere anlagen- bzw. steuerungstechnische Maßnahmen zu ergreifen sind.

### Bezugszeichenliste

- 1: Luftverdichter
- 2: Vierkreisschutzventil
- 3: Vorratsbehälter im Bremskreis I
- 4: Vorratsbehälter im Bremskreis II
- 5: Bremselemente an der Vorderachse
- 6: Bremselemente an der Hinterachse
- 7: Vorderachse
- 8: Hinterachse
- 9: Anhänger-Steuerventil
- 10: Anschlusselement
- 10a: Kupplungskopf für die Vorratsleitung der Anhängerbremsanlage
- 10b: Kupplungskopf für die Bremssteuerleitung der Anhängerbremsanlage
- 11: Zweiwegeventil
- 12: Nebenverbraucher
- 13: Sensor
- 14: Steuereinheit
- 15: Redundanzleitung
- 16: EBS-Druckmodul
- 17: Bremsschlauch
- 18: Kupplungskopf
- 19: Verbindungselement

## Patentansprüche

1. Druckluftbremsanlage eines Nutzfahrzeugs, mit wenigstens einer Luftverdichtereinheit (1), durch die gegenüber Umgebungsluft zumindest teilweise verdichtete Luft erzeugbar und in wenigstens einen ersten (I) sowie einen zweiten Bremskreis (III) förderbar ist, wobei an wenigstens einer Fahrzeugachse (7, 8) zumindest ein Bremselement (5, 6) vorgesehen ist, das über den ersten Bremskreis (I) mit verdichteter Luft versorgbar ist und wobei der zweite Bremskreis (III) ein Anschlusselement (10) aufweist, an das eine Bremsleitung eines Anhängers und/oder Aufliegers zur Versorgung einer Anhängerbremsanlage mit verdichteter Luft ankoppelbar ist, und eine Redundanzleitung (15) vorgesehen ist, die mit dem Anschlusselement (10) und/oder mit einer Zuführleitung, über die das Anschlusselement (10) zumindest teilweise mit verdichteter Luft versorgbar ist, verbunden ist und über die das zumindest eine Bremselement (5, 6) wenigstens zeitweise mit verdichteter Luft versorgbar ist,
**dadurch gekennzeichnet, dass** zwischen dem Anschlusselement (10) und dem ersten Bremskreis (I) ein Zweiwegeventil (11) angeordnet ist, das in Abhängigkeit eines von einem Sensorelement (13), mit dem eine Versorgung oder Nichtversorgung der Anhängerbremsanlage mit verdichteter Luft detektierbar ist, generierten Signal gesteuert wird.

2. Druckluftbremsanlage nach Anspruch 1,
**dadurch gekennzeichnet, dass** der erste Bremskreis (I) ein Vorderachsbremskreis ist.

3. Druckluftbremsanlage nach Anspruch 1 oder 2,
**dadurch gekennzeichnet, dass** der erste Bremskreis (I) ein Vorderachsbremskreis einer Sattelzugmaschine ist.

4. Druckluftbremsanlage nach einem der Ansprüche 1 bis 3,
**dadurch gekennzeichnet, dass** das Anschlusselement ein Kupplungskopf (18) eines Bremsschlauches (17) einer Sattelzugmaschine ist und der Kupplungskopf (18) zumindest annähernd luftdicht mit der Redundanzleitung (15) verbindbar ist.

5. Druckluftbremsanlage nach einem der Ansprüche 1 bis 4,
**dadurch gekennzeichnet, dass** zwischen dem Anschlusselement (10) und dem ersten Bremskreis (I) zwei Zweiwegeventile (11) angeordnet sind.

6. Verfahren zur Versorgung einer Druckluftbremsanlage eines Nutzfahrzeugs mit zumindest teilweise gegenüber Umgebungsluft verdichteter Luft, die in einen ersten (I) und einen zweiten Bremskreis (III) gefördert wird, wobei über den ersten Bremskreis (I) zumindest ein an einer Vorderachse (7) des Nutzfahrzeugs angeordnetes Bremselement (5) und über den zweiten Bremskreis (III) ein Anschlusselement (10) des Nutzfahrzeugs, an das wenigstens ein Bremskreis eines Anhängers und/oder Aufliegers anschließbar ist, mit verdichteter Luft versorgt wird,
**dadurch gekennzeichnet, dass** überwacht wird, ob an das Anschlusselement (10) ein Bremskreis des Anhängers und/oder Aufliegers angeschlossen ist und dass sobald festgestellt wird, dass kein Bremskreis des Anhängers und/oder Aufliegers angeschlossen ist, ein Ventil (11) derart in einen Bereitschaftszustand versetzt wird, dass im Bedarfsfall zumindest teilweise verdichtete Luft vom zweiten (III) in den ersten Bremskreis (I) geleitet wird.

7. Verfahren nach Anspruch 6,
**dadurch gekennzeichnet, dass** ein Druckabfall in einem Bremskreis, über den die Bremselemente im störungsfreien Betriebszustand des Nutzfahrzeugs mit verdichteter Luft versorgt werden, als Bedarfsfall festgelegt wird.

## Claims

1. Air brake system for a commercial vehicle with at least one compressor unit (1) with which air can be compressed to at least a pressure slightly higher than that of the ambient air and can be directed into at least a first (I) and a second (III) brake circuit, and whereby on at least one vehicle axle (7, 8) at least one brake element (5, 6) is attached which is capable of supplying compressed air via the first brake circuit (I) and whereby the second brake circuit (III) features a connecting element (10) to which one brake line of a trailer and/or a semitrailer can be attached in order to supply compressed air to a trailer brake system and also a redundancy line (15) is provided which can, at least partially, be supplied with compressed air with the connecting element (10) and/or with a supply line via which the connecting element (10) is able to receive at least some compressed air and via which the at least one brake element (5, 6) can be supplied with compressed air at least at times, **characterised in that** a two-way valve (11) is arranged between the connecting element (10) and the first brake circuit (I) and is controlled by a signal generated by a sensor element (13) which detects whether or not the trailer brake system is being supplied with compressed air.

2. Air brake system according to Claim 1,
**characterised in that** the first brake circuit (I) is a front axle brake circuit.

3. Air brake system according to Claim 1 or 2,
**characterised in that** the first brake circuit (I) is a front axle brake circuit on a semitrailer tractor.

4. Air brake system according to one of Claims 1 to 3,
**characterised in that** the connecting element is a coupling head (18) on a brake hose (17) on a semitrailer tractor and that the coupling head (18) can be connected to the redundancy line (15) with an at least virtually airtight seal.

5. Air brake system according to one of Claims 1 to 4
**characterised in that** a pair of two-way valves (11) is arranged between the connecting element (10) and the first brake circuit (I).

6. Procedure for supplying the compressed air system in a commercial vehicle with air at least partially at a pressure higher than that of the ambient air, said air being directed into a first (I) and a second (III) brake circuit, whereby compressed air is supplied via the first brake circuit (I) to at least one brake element (5) arranged on a front axle (7) of the commercial vehicle and to a connecting element (10) on the commercial vehicle via the second brake circuit (III), to which connecting element (10) at least one brake circuit for a trailer and/or semitrailer can be connected, **characterised in that** the system is able to monitor whether or not the connecting element (10) is in fact attached to a brake circuit on a trailer and/or semitrailer and is able, as soon as it has detected that no trailer and/or semitrailer brake circuit is connected up, to move a valve (11) into a readiness setting in such a way that, in case of need, at least partially compressed air is conducted from the second (III) to the first (I) brake circuit.

7. Procedure according to Claim 6,
**characterised in that** any drop in pressure in a brake circuit through which brake elements are supplied with compressed air while the commercial vehicle is in fault-free operating condition is defined as a case of need.

## Revendications

1. Système de freinage pneumatique d'un véhicule industriel, avec au moins une unité de compression d'air (1) permettant de produire au moins de l'air partiellement comprimé par rapport à l'air ambiant et d'être conduit dans au minimum un premier circuit de freinage (I) ainsi qu'un deuxième circuit de freinage (III), auquel cas au minimum un élément de freinage (5, 6) est prévu au moins au niveau d'un essieu de véhicule (7, 8) et peut être alimenté avec de l'air comprimé via le premier circuit de freinage (I) et auquel cas le deuxième circuit de freinage (III) présente un élément de raccordement (10) permettant de relier une conduite de frein d'une remorque et/ou d'une semi-remorque pour alimenter le circuit de freinage de la remorque en air comprimé, et une conduite redondante (15) est prévue et est reliée à l'élément de raccordement (10) et/ou à une conduite d'alimentation par le biais de laquelle l'élément de raccordement (10) peut être alimenté au moins partiellement en air comprimé et par le biais de laquelle au minimum un des éléments de freinage (5, 6) peut être alimenté au moins partiellement en air comprimé,
**caractérisé en ce qu'**une valve à 2 voies (11) est disposée entre l'élément de raccordement (10) et le premier circuit de freinage (I) et est pilotée en fonction d'un signal généré par un élément de capteur (13) permettant de détecter une alimentation ou une absence d'alimentation du système de freinage de la remorque en air comprimé.

2. Système de freinage pneumatique selon la revendication 1,
**caractérisé en ce que** le premier circuit de freinage (1) est un circuit de freinage pour essieu avant.

3. Système de freinage pneumatique selon la revendication 1 ou 2,
**caractérisé en ce que** le premier circuit de freinage (I) est un circuit de freinage pour essieu avant d'un tracteur routier.

4. Système de freinage pneumatique selon l'une des revendications 1 à 3,
**caractérisé en ce que** l'élément de raccordement est une tête d'accouplement (18) d'un tuyau flexible de frein (17) d'un tracteur routier et la tête d'accouplement (18) peut être reliée à la conduite redondante (15) au moins approximativement étanche à l'air.

5. Système de freinage pneumatique selon l'une des revendications 1 à 4,
**caractérisé en ce que** deux valves à deux voies (11) sont disposées entre l'élément de raccordement (10) et le premier circuit de freinage (I).

6. Procédé d'alimentation d'un système de freinage pneumatique d'un véhicule industriel en air comprimé au moins partiellement par rapport à l'air ambiant, cet air comprimé étant conduit dans un premier circuit de freinage (I) et dans un deuxième circuit de freinage (III), auquel cas, via le premier circuit de freinage (I), au minimum un élément de freinage (5) disposé sur un essieu avant (7) du véhicule industriel et, via le deuxième circuit de freinage (III), un élément de raccordement (10) du véhicule industriel sont alimentés en air comprimé, cet élément pouvant être raccordé à au minimum un circuit de freinage d'une remorque et/ou semi-remorque,
**caractérisé en ce que** le système surveille si un circuit de freinage de la remorque et/ou semi-remorque est raccordé à l'élément de raccordement (10) et **en ce que**, dès que le système détecte qu'aucun circuit de freinage de la remorque et/ou semi-remorque n'est raccordé, une valve est déplacée tant dans un état de disponibilité qu'en cas de besoin, au moins de l'air partiellement comprimé soit guidé du deuxième circuit (III) dans le premier circuit de freinage (I).

7. Procédé selon la revendication 6
**caractérisé en ce qu'**une chute de pression dans un circuit de freinage par le biais duquel les éléments de freinage sont alimentés en air comprimé dans un état de service parfait du véhicule industriel, est considérée comme cas de besoin.
